(19) Europäisches Patentamt / European Patent Office / Office européen des brevets

(11) **EP 4 019 779 A1**

(12) # EUROPEAN PATENT APPLICATION


(43) Date of publication:
**29.06.2022 Bulletin 2022/26**

(21) Application number: **20216862.1**

(22) Date of filing: **23.12.2020**

(51) International Patent Classification (IPC):
***F04D 15/00*** *(2006.01)* ***F04D 13/12*** *(2006.01)*
***F04D 13/14*** *(2006.01)* ***F04D 15/02*** *(2006.01)*
***G05B 23/02*** *(2006.01)*

(52) Cooperative Patent Classification (CPC):
**F04D 15/0088; F04D 15/029; G05B 23/024**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Grundfos Holding A/S**
**8850 Bjerringbro (DK)**

(72) Inventors:
- **Kallesøe, Carsten Skovmose**
  **8850 Bjerringbro (DK)**
- **Hassan, Abdul-Sattar**
  **8850 Bjerringbro (DK)**
- **Aarestrup, Jan Carøe**
  **8850 Bjerringbro (DK)**

(74) Representative: **Patentanwälte Vollmann Hemmer Lindfeld**
**Partnerschaft mbB**
**Wallstraße 33a**
**23560 Lübeck (DE)**


(54) **A PUMP MONITORING SYSTEM AND METHOD FOR ASSOCIATING A CURRENT OPERATING STATE OF A PUMP SYSTEM WITH ONE OR MORE FAULT SCENARIOS**


(57) A pump monitoring system for associating a current operating state of a pump system (1) comprising n ≥ 1 pumps (3) with one or more of k ≥ 1 fault scenarios, wherein the pump monitoring system comprises
- an interface module for receiving at least one set of m ≥ 2 operational values from the pump system, wherein the m operational values define a current operational point in an m-dimensional operating space, and
- a processing module (11) for processing the operational values received by the interface module,
wherein the processing module (11) is configured to consult given or determined model parameters describing a non-faulty model pump characteristic in the m-dimensional operating space, wherein the processing module (11) is further configured to determine a k-dimensional decision vector with k decision vector components being indicative of a deviation between
- an actual differential volume in the m-dimensional operating space based on distances between the m operational values and the non-faulty model pump characteristic, and
- a modelled differential volume in the m-dimensional operating space for the respective fault scenario.


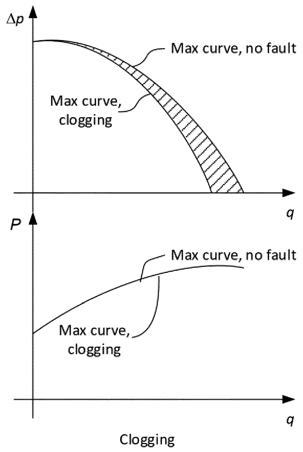


Fig. 5a

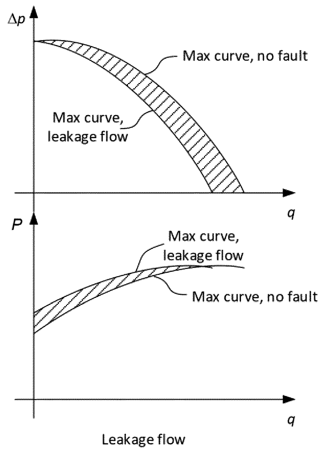


Fig. 5b

EP 4 019 779 A1

**Description**

TECHNICAL FIELD

The present disclosure relates generally to pump monitoring systems and methods for associating a current operating state of a pump system with one or more fault scenarios, in particular for pump systems comprising submersible pumps, wastewater pumps and/or booster pumps.

BACKGROUND

Water supply systems may comprise one or more submersible pumps for retrieving water from a well or borehole. Booster systems may be used to pump the water uphill or upward in a large building. Sewage or wastewater collection systems for wastewater treatment plants typically comprise one or more wastewater pits, wells or sumps for temporarily collecting and buffering wastewater. Typically, wastewater flows into such pits passively under gravity flow and/or actively driven through a force main. One, two or more pumps are usually installed in or at each pit to pump wastewater out of the pit. If the inflow of wastewater is larger than the outflow for a certain period of time, the wastewater pit or sump will eventually overflow. Such overflows should be prevented as much as possible in order to avoid environmental impact. Therefore, any pump fault or clogging, pipe clogging, leakage or other type of faulty operating scenario should be identified as quickly as possible for maintenance staff to take according action, like cleaning, repairing or replacing as quickly as possible.

WO 2005/078287 A1 describes a method for determining faults during the operation of a pump unit with a as little sensor equipment as possible.

WO 2009/039934 A1 describes a method for monitoring a pump assembly, wherein signal is generated for indicating an efficiency drop based on monitoring a plurality of performance-dependent variables overtime. In practice, however, many parameters must be identified for monitoring the plurality of performance-dependent variables over time according to the method described in WO 2009/039934 A1. This is in particular difficult for monitoring a pump system with more than one pump.

It is therefore an object of the present disclosure to provide a pump monitoring system and method that requires less parameter identification for reliably associating a current operating state with one or more fault scenarios.

SUMMARY

In accordance with a first aspect of the present disclosure, a pump monitoring system is provided for associating a current operating state of a pump system comprising $n \geq 1$ pumps with one or more of $k \geq 1$ fault scenarios, wherein the pump monitoring system comprises

- an interface module for receiving at least one set of $m \geq 2$ operational values from the pump system, wherein the m operational values define a current operational point in an m-dimensional operating space, and
- a processing module for processing the operational values received by the interface module,

wherein the processing module is configured to consult given or determined model parameters describing a non-faulty model pump characteristic in the m-dimensional operating space, wherein the processing module is further configured to determine a k-dimensional decision vector with k decision vector components being indicative of a deviation between

- an actual differential volume in the m-dimensional operating space based on distances between the m operational values and the non-faulty model pump characteristic, and
- a modelled differential volume in the m-dimensional operating space for the respective fault scenario.

The interface module may be integrated into the processing module or a separate module being signal-connected to the processing module. It should be noted that the decision vector is a scalar if $k = 1$. In this case, the single decision vector component may be interpreted as an absolute trust value indicating how much it is to be trusted if the current operating state is associated with a single fault scenario. If $k > 1$, an operator may compare the decision vector components with each other in order to decide which of the fault scenarios the current operating state is best associated with. The non-faulty model pump characteristic in the m-dimensional operating space may be given, stored or provided by the pump manufacturer. Alternatively, or in addition, the non-faulty model pump characteristic in the m-dimensional operating space may be determined in setup-runs in an initial configuration after first installation of the pump system. In any case, the non-faulty model pump characteristic is the reference to determine the actual differential volume between the operation as it is and as it should be. This actual differential volume is compared to a modelled differential volume for each fault scenario, so that the deviation, i.e. the decision vector component, is a measure for how much the current operating state fits to the respective fault model.

Compared to methods and system known in the prior art, significantly fewer parameters must be identified, because the number of parameters to be identified can be reduced to one or two by modelling the differential volume in the m-dimensional operating space for the respective fault scenario. There is thus no need to determine a fully modelled surface for each fault scenario in the m-dimensional operating space.

Optionally, the pump system may have a fixed speed at any operational point, wherein the at least one set of $m \geq 2$ operational values comprises any of the group of sets comprising:

- a q-indicator indicative of a flow through the pump system and a P-indicator indicative of a power consumption of the pump system;
- a q-indicator indicative of a flow through the pump system and a $\Delta p$-indicator indicative of a differential pressure across the pump system; and
- a $\Delta p$-indicator indicative of a differential pressure across the pump system and a P-indicator indicative of a power consumption of the pump system.

This is an exceptional situation in which the one or more pumps in the pump system are single-speed pumps and/or their speed is fixed for other reasons. In this exceptional situation, the operating space is two-dimensional, e.g. spanned by q,P or q,$\Delta p$ or $\Delta p$,P. This means that the differential "volume" in the two-dimensional operating space is in fact an area.

Optionally, the pump system may have a variable speed, and wherein the at least one set of $m \geq 2$ operational values comprises any of the group of sets comprising:

- a q-indicator indicative of a flow through the pump system, a P-indicator indicative of a power consumption of the pump system, and a $\omega$-indicator indicative of a current speed of the pump system;
- a q-indicator indicative of a flow through the pump system, a $\Delta p$-indicator indicative of a differential pressure across the pump system, and a $\omega$-indicator indicative of a current speed of the pump system;
- a $\Delta p$-indicator indicative of a differential pressure across the pump system, a P-indicator indicative of a power consumption of the pump system, and a $\omega$-indicator indicative of a current speed of the pump system; and
- a $\Delta p$-indicator indicative of a differential pressure across the pump system, a P-indicator indicative of a power consumption of the pump system, and a q-indicator indicative of a flow through the pump system.

This is the most likely situation in which the one or more pumps in the pump system are variable-speed pumps with a controlled speed. The operating space is here three-dimensional, e.g. spanned by q,P,$\omega$ or q,$\Delta p$,$\omega$ or $\Delta p$,P,$\omega$ or q,P,$\Delta p$.

Optionally, the P-indicator may comprise any of the group comprising:

- measured or set power consumption of the pump system;
- measured or set pump motor shaft torque; and
- measured or set pump motor current and voltage, or measured or set pump motor current alone if the voltage is constant.

Optionally, the q-indicator may comprise any of the group comprising:

- measured or set flow through the pump system; and
- measured or set fluid level above an inlet port of the pump system.

Optionally, the $\Delta p$-indicator may comprise any of the group comprising:

- measured or set pressure at an inlet port of the pump system;
- measured or set differential pressure across the pump system;
- measured or set pressure at an outlet port of the pump system; and
- measured or set fluid level above an inlet port of the pump system.

Optionally, the $k \geq 1$ fault scenarios may comprise any of the group comprising:

- pipe clogging,
- leakage flow,
- mechanical or electrical fault,
- sensor fault,

- cavitation, and
- air suction.

So, for each fault scenario, the respective decision vector component is a measure for the trust in associating the current operating state with said fault scenario.

Optionally, the pump system may comprise one or more submersible pumps and/or wastewater pumps and/or booster pumps. The pump monitoring system is particularly beneficial for these applications.

Optionally, each decision vector component may be a scalar on a normalized scale, wherein the normalized scale is identical for all decision vector components. This makes it very easy to compare the decision vector components. For instance, each decision vector component may range between 0 and 1, wherein small values close to 0 means little association with the respective fault scenario and large values close to 1 mean a strong association with the respective fault scenario.

Optionally, the pump system may further comprise a displaying module being configured to display at least one of the decision vector components for a respective fault scenario. This gives an operator the opportunity to decide himself/herself whether the displayed decision vector component is high enough to associate the current operating state with the respective fault scenario. This increases the trust in the fault scenario association. A certain color-coding or other visualisation of the decision vector components may emphasise the most significant decision vector components.

Optionally, the displaying module may be further configured to display one or more graphs of selected operational values according to the non-faulty model pump characteristic and to indicate the current operational point in said one or more graphs. This further increases the trust in the decision-making process, because an operator can comprehend the basis for the abstract numerical values of the decision vector components better. This also provides for a sanity check, i.e. whether a decision vector component "makes sense" in view of the displayed current operational point in the graphs.

Optionally, the displaying module may be configured to select the operational values for displaying the graphs according to their contribution to the most significant decision vector components. This is useful to immediately show an operator the relevant deviation from the non-faulty model pump characteristic as the main reason for the most significant decision vector components. There is thus no need to search for the relevant graph.

Optionally, the processing module may be configured to model the modelled differential volume by a model function comprising one or two variation parameters, wherein the processing module is configured to vary the one or two variation parameters for fitting the modelled differential volume to the actual differential volume. This is particularly beneficial for monitoring pump systems that operate at only one or only few operating points all the time. This means that there is too little information available to establish a full model in the m-dimensional operating space, e.g. a full model surface in the three-dimensional operating space. Even in this situation, the variation of the one or two variation parameters in order to fit the modelled differential volume to the actual differential volume yields useful decision vector components to decide which is currently the most likely fault scenario. Furthermore, the decision vector components become more distinct and useful the more operating points are available. So, an operator may specifically switch operational points to validate or to improve the distinctiveness of the decision vector components. Alternatively, or in addition, the pump monitoring system may be configured to automatically command the pump system to switch operational points if more information is needed or useful. This may be referred to as "active fault isolation".

Optionally, the processing module may be configured to minimise the deviation between the modelled differential volume and the actual differential volume, for example by applying a least-squared method. Optionally, the k decision vector components may be indicative of a residual deviation after minimizing the deviation between the modelled differential volume and the actual differential volume.

Optionally, the processing module may be configured to associate the current operating state with only those of the k fault scenarios for which the respective decision vector component has passed a pre-determined threshold, e.g. 0.5. This is useful to exclude a decision-making process based on poor data. The pre-determined threshold may be a lower limit for the distinctiveness of the decision vector component.

Optionally, the processing module may be configured to associate the current operating state with exactly one of $k \geq 2$ fault scenarios if the respective decision vector component for said fault scenario differs from a closest one of the other decision vector components by at least a pre-determined difference.

Optionally, the processing module may be configured to command the pump system to run at another operational point in the m-dimensional operating space if none of the $k \geq 2$ decision vector components differs from a closest one of the other decision vector components by at least a pre-determined difference. In this case, the distinctiveness of the decision vector components is not sufficient for making a call on what is the most likely fault scenario. More information from running at another operational point increases the distinctiveness of the decision vector components. This may be referred to as "active fault isolation".

In accordance with a second aspect of the present disclosure, a method is provided for associating a current operating state of a pump system comprising $n \geq 1$ pumps with one or more of $k \geq 1$ fault scenarios, wherein the method comprises:

- receiving at least one set of $m \geq 2$ operational values from the pump system, wherein the m operational values define a current operational point in an m-dimensional operating space,
- processing the operational values,
- consulting given or determined model parameters describing a non-faulty model pump characteristic in the m-dimensional operating space,
- determining a k-dimensional decision vector with k decision vector components being indicative of a deviation between

  o a actual differential volume in the m-dimensional operating space based on distances between the m operational values and the non-faulty model pump characteristic, and
  o a modelled differential volume in the m-dimensional operating space for the respective fault scenario,

  and
- displaying at least one of the k decision vector components for the respective fault scenario.

Optionally, the pump system may be operated at a fixed speed at any operational point, and wherein the at least one set of $m \geq 2$ operational values comprises any of the group of sets comprising:

- a q-indicator indicative of a flow through the pump system and a P-indicator indicative of a power consumption of the pump system;
- a q-indicator indicative of a flow through the pump system and a $\Delta$p-indicator indicative of a differential pressure across the pump system; and
- a $\Delta$p-indicator indicative of a differential pressure across the pump system and a P-indicator indicative of a power consumption of the pump system.

Optionally, the wherein pump system may be operated at different speeds, and wherein the at least one set of $m \geq 2$ operational values comprises any of the group of sets comprising:

- a q-indicator indicative of a flow through the pump system, a P-indicator indicative of a power consumption of the pump system, and a $\omega$-indicator indicative of a current speed of the pump system;
- a q-indicator indicative of a flow through the pump system, a $\Delta$p-indicator indicative of a differential pressure across the pump system, and a $\omega$-indicator indicative of a current speed of the pump system;
- a $\Delta$p-indicator indicative of a differential pressure across the pump system, a P-indicator indicative of a power consumption of the pump system, and a $\omega$-indicator indicative of a current speed of the pump system; and
- a $\Delta$p-indicator indicative of a differential pressure across the pump system, a P-indicator indicative of a power consumption of the pump system, and a q-indicator indicative of a flow through the pump system.

Optionally, the P-indicator may comprise any of the group comprising:

- measured or set power consumption of the pump system;
- measured or set pump motor shaft torque; and
- measured or set pump motor current and voltage, or measured or set pump motor current alone if the voltage is constant.

Optionally, the q-indicator may comprise any of the group comprising:

- measured or set flow through the pump system; and
- measured or set fluid level above an inlet port of the pump system.

Optionally, the $\Delta$p -indicator may comprise any of the group comprising:

- measured or set pressure at an inlet port of the pump system;
- measured or set differential pressure across the pump system;
- measured or set pressure at an outlet port of the pump system; and
- measured or set fluid level above an inlet port of the pump system.

Optionally, the $k \geq 1$ fault scenarios may comprise any of the group comprising:

- pipe clogging,
- leakage flow,
- mechanical or electrical fault,
- sensor fault,
- cavitation, and
- air suction.

Optionally, the pump system may comprise one or more submersible pumps and/or wastewater pumps and/or booster pumps.

Optionally, each decision vector component may be a scalar on a normalized scale, wherein the normalized scale is identical for all decision vector components.

Optionally, the method may further comprise displaying one or more graphs of selected operational values according to the non-faulty model pump characteristic and to indicate the current operational point in said one or more graphs.

Optionally, the method may further comprise selecting the operational values for displaying the graphs according to their contribution to the most significant decision vector components.

Optionally, the modelled differential volume may be modelled by a model function comprising one or two variation parameters, wherein the one or two variation parameters are varied for fitting the modelled differential volume to the actual differential volume.

Optionally, the deviation between the modelled differential volume and the actual differential volume may be minimised, for example by applying a least-squared method.

Optionally, the k decision vector components may be indicative of a residual deviation after minimizing the deviation between the modelled differential volume and the actual differential volume.

Optionally, the method may further comprise associating the current operating state to only those of the k fault scenarios for which the respective decision vector component has passed a pre-determined threshold.

Optionally, the method may further comprise associating the current operating state to exactly one of $k \geq 2$ fault scenarios if the respective decision vector component for said fault scenario differs from a closest one of the other decision vector components by at least a pre-determined difference.

Optionally, the method may further comprise commanding the pump system to run at another operational point in the m-dimensional operating space if none of $k \geq 2$ decision vector components differs from a closest one of the other decision vector components by at least a pre-determined difference.

SUMMARY OF THE DRAWINGS

Embodiments of the present disclosure will now be described by way of example with reference to the following figures of which:

Figs. 1a,b show schematically two examples of pump systems for which the pump monitoring system and method disclosed herein is applicable, wherein Fig. 1a shows a pump system with a single pump and Fig. 1b show a pump system with three pumps;

Fig. 2 shows a submersible pump as a possible application of the pump monitoring system and method disclosed herein;

Fig. 3 shows a wastewater pump station as a possible application of the pump monitoring system and method disclosed herein;

Fig. 4 shows a non-faulty model pump characteristic in form of four surfaces in the three-dimensional operating space of an example of a pump system for which the pump monitoring system and method disclosed herein is applicable;

Figs. 5a,b illustrate, at maximum pump speed, a modelled differential volume in the m-dimensional operating space for two different fault scenarios;

Fig. 6a shows the pump speed of each pump in a two-pump system and a plurality of residual deviations after minimizing the deviation between the modelled differential volume and the actual differential volume over time in a scenario with two fault types;

Fig. 6b shows two decision vectors in form of rows in a table for the scenario shown in Fig. 6a;

Fig. 7a shows the pump speed of each pump in a two-pump system and a plurality of residual deviations after minimizing the deviation between the modelled differential volume and the actual differential volume over time in a scenario with two more fault types;

Fig. 7b shows two decision vectors in form of rows in a table for the scenario shown in Fig. 7a; and

Fig. 8 shows an example of a display to an operator of the pump system.

Fig. 1a shows a pump system 1 comprising a single pump unit 3 with variable speed. In the example shown, the pump speed is controlled by a variable frequency controller (VFC) 5 that may be integrated into the electronics of pump unit 3 and/or in an external control module in signal connection with the pump unit 3. A differential pressure $\Delta p$ generated by the pump unit 3 is measured by a pressure sensor 7 or determined by difference of two pressure sensors, one of which being arranged upstream of the pump unit 3 and the other one being arranged downstream of the pump unit 3. A flow q generated by the pump unit 3 is measured by a flow sensor 9 or estimated from performance values of the pump unit 3. A pump monitoring system with a processing module 11 described herein is used to associate a current operating state of the pump unit 3, being defined by the current pump speed $\omega$, power consumption P, differential pressure $\Delta p$ and flow q, with one or more fault scenarios. The information about the current pump speed $\omega$ and power consumption P is readily available from the VFC 5. In any embodiment described herein, the processing module 11 may be implemented in the VFC 5 or, as shown in Fig.1a, on a remote computer or a cloud-based system 13. The pump monitoring system further comprises an interface module (not explicitly shown) being signal-connected to the VFC 5 via a wireless or wired signal connection 15. In any embodiment described herein, the interface module may be integrated into the processing module 11 or a separate module being signal-connected to the processing module 11. The interface module may further comprise wireless or wired signal connections 15 to the pressure sensor 7 and/or the flow sensor 9. In an alternative embodiment, the VFC 5 may further comprise wireless or wired signal connections 15 to the pressure sensor 7 and/or the flow sensor 9. In this case, there is no need for a direct signal connection 15 between the interface module and the pressure sensor 7 and/or the flow sensor 9. The VFC 5 may pass the measured values on to the interface module, so that there is an indirect signal connection between the interface module and the pressure sensor 7 and/or the flow sensor 9.

Fig. 1b shows a multi-pump system 1, e.g. a booster station, comprising three pump units 3 installed in parallel to each other. Each of the pump units 3 may be identical to the pump unit 3 shown in Fig.1a. The speed of each pump unit 3 is controlled by a dedicated variable frequency controller 5, i.e. $VFC_1$, $VFC_2$ and $VFC_3$. The dedicated variable frequency controllers 5 may be implemented in the respective control electronics of the pump units 3 or in one or more external control modules in signal connection with the pump units 3. As in Fig. 1a, the interface module may be signal-connected to all of the VFCs 5, or to at least one of the VFCs 5 if they are signal-connected to each other, e.g. via a bus connection. The pressure sensor 7 and/or the flow sensor 9 may be used to measure the total differential pressure $\Delta p$ and/or the total flow Q, respectively, generated by the multi-pump system 1. The total flow Q is the sum of the flows q of each running pump unit 3. The multi-pump system 1 may be operated with one, two or three pump unit 3 running. It should be noted that a non-return valve 17 is installed downstream of each pump unit 3 in order to prevent a back-flow through a non-running or slower-running pump unit 3. Typical fault scenarios may be a clogging in one or more of the pump units 3, a leakage of one or more of the pump units 3, a leakage of one or more of the non-return valves 17, mechanical/electrical issues in one or more of the pump units 3, cavitation, or air.

Fig. 2 shows a relevant application of the pump monitoring system and method disclosed herein for a pump system 1 comprising a submersible pump 3 in a borehole 19. As the submersible pump 3 is not easily accessible, manual supervision of the submersed pump 3 is difficult or impossible. Moreover, submersed pumps are likely to be negatively affected by sand or ocher wearing out the pump and creating clogging. Therefore, the pump monitoring system and method disclosed herein is particularly useful for this application. The setup may in principle be the same as in Fig. 1a. One or more level sensors (not shown) may be used to determine a water level h indicative of a hydrostatic pressure at an inlet of the submersed pump 3 relative to a pressure sensor 21 in order to determine a differential pressure $\Delta p$ by $\Delta p = p_{out} + c \cdot h$, wherein $p_{out}$ is the measured outlet pressure at the pressure sensor 21 and c is a constant scaling factor.

Fig. 3 shows a further application of the pump monitoring system and method disclosed herein for a pump system 1 comprising one or more wastewater pumps 3 in a wastewater pit 22. The setup may be in principle the same as in Fig. 2 with a multi-pump system as shown in Fig. 1b. One or more level sensors (not shown) may be used to determine a water level h relative to the outlet pressure sensor 21, wherein h is indicative of a differential hydrostatic pressure at an outlet of the wastewater pumps 3 in order to determine a differential pressure $\Delta p$. In larger wastewater pumping stations, the total flow Q is often measured. Alternatively, the total flow Q can be estimated based on performance values of the wastewater pumps 3.

The following operational values may in principle describe the current operational point for all applications:

- q: Flow through the pump or pumping station,
- $\Delta$p: The pressure across the pump or pumping station,
- $\omega$: Speed of the running pumps,
- P: Power consumption of the individual pumps,

wherein three of these operational values are sufficient to fully describe the current operational point. The relations between the four possible sets [q,$\omega$,P], [q,$\omega$,$\Delta$p], [$\omega$,$\Delta\rho$,P], and [q,P,$\Delta$p] are shown in the four surface plots in Fig. 4 illustrating the three-dimensional operating space for variable speed pump systems 1. It should be noted that pump systems with fixed speed may have a two-dimensional operating space described by the three possible sets [q,P], [q,$\Delta$p], or [$\Delta$p,P]. However, other values may be measured that are directly or indirectly indicative of one or more of the above-mentioned values, for example:

$\tau$ : The shaft torque $\tau$ may be used as an alternative to the power consumption P. The relation P=$\tau\omega$ may be used.

I : The motor current I may be used as an alternative to the power consumption P. For permanent-magnet motors, the relation P~I$\omega$ may be used. The current measurement may allow taking into account further power losses. This may increase the precision of the fault isolation.

V : If not constant, the motor voltage V may be used in addition motor current I. The relation P=VI cos$\Phi$ may be used, wherein V and I are root mean squared values and $\varphi$ is the phase angle between V and I. The voltage measurement may allow taking into account further power losses. This may increase the precision of the fault isolation.

h : For submersible pumps or wastewater pumps, as an alternative to measuring the flow q, one or more level sensors may measure a filling level h in a tank or borehole relative to the pressure sensor. The relation $q(t) \approx A(h)\frac{h(t+\Delta t)-h(t)}{\Delta t} + d(t)$ may be used, where t is time, $\Delta$t is a time step between level measurements, A(h) is a known cross-section of the tank or borehole at each measured level h, and d(t) is a known load flow. As the filling level h provides a differential hydrostatic pressure at the pump inlet, the differential pressure may be determined by $\Delta p = p_{out} + c \cdot h$, wherein $p_{out}$ is the measured outlet pressure and c is a constant scaling factor.

The surfaces shown in Fig. 4 represent non-faulty model pump characteristics that are readily available to the processing module 11 of the pump monitoring system. They may either be stored in, previously determined, downloaded or otherwise retrieved by the processing module 11. It is important to note that there is no need for the pump monitoring system 11 to determine such surfaces for fault model pump characteristics according to each fault scenario. This is exactly what the pump monitoring system and method described herein achieves to avoid, because there is often not enough information available to establish full fault model pump characteristics according to each fault scenario.

Mathematically, the non-faulty model pump characteristics may be described by as follows:

$$\Delta p = h(q, \omega)$$

$$P = g(q, \omega)$$

where *q* is the flow provided per pump unit 3, $\omega$ is the pump speed, $\Delta p$ is the differential pressure or head provided by the pump unit 3, and *P* is the power consumption. In their most simple form, *h* and *g* are second and third order polynomials on the form

$$h(q, \omega) = a_h q^2 + b_h q\omega + c_h \omega^2$$

$$g(q, \omega) = a_P q^2 \omega + b_P q\omega^2 + c_P \omega^3$$

These polynomials mean that the expected or non-faulty operation of a centrifugal pump can be parameterized

by the parameters $a_h$, $b_h$, $c_h$ and $a_p$, $b_p$,$c_p$. Here, it is assumed that these parameters are provided by the pump manufacturer or that they are identified under non-faulty operating conditions, e.g. using an approach as described in WO 2009/039934 A1.

In the case of a pump system with $N$ parallel connected equal size pumps, where $0 < n \leq N$ of the pumps are running at the same speed, $h$ and g may be given by

$$h(q,\omega,n) = a_h\left(\frac{Q}{n}\right)^2 + b_h\left(\frac{Q}{n}\right)\omega + c_h\omega^2$$

$$g(q,\omega,n) = a_P\left(\frac{Q}{n}\right)^2\omega + b_P\left(\frac{Q}{n}\right)\omega^2 + c_P\omega^3$$

wherein $Q$ is the total flow of the pumping station and $P_i = g(Q,\omega,n)$ is the power consumption of pump $i$, i.e. it is assumed that all active pumps use the same power and Q = nq.

A booster system 1 with more than one pump in parallel is typically controlled by setting the number n of running pumps depending on the load of the booster system, e.g. more pumps are activated if higher total flow is needed and fewer pumps are activated for less total flow. If only the sum of the power consumptions of the activated pumps is available, then for $n$ active pumps the power consumption may equal to

$$\bar{g}(q,\omega,n) = n\left(a_P\left(\frac{Q}{n}\right)^2\omega + b_P\left(\frac{Q}{n}\right)\omega^2 + c_P\omega^3\right)$$

Figs. 5a,b illustrate, at maximum speed, a modelled differential volume in the m-dimensional operating space for two different fault scenarios, i.e. pump clogging in Fig. 5a and a leakage flow in Fig. 5b. Please note that only a "slice" of the differential volume is here displayed as a hatched area for maximum speed. The hatched area is a differential volume in the three-dimensional operating space as shown in Fig. 4 once the speed is varied. The differential volumes describe the difference between the expected non-faulty operating conditions and the current operating conditions. The surfaces $q.\omega.\Delta p$ (pressure curve) and $q,\omega$,P (power curve) at maximum speed are shown in the non-faulty case and in the case of a clogging (Fig. 5a) and leakage fault (Fig. 5b), respectively. The differential volume (hatched area) characterizes the fault scenario. However, it should be noted that the fault curves, i.e. the curves for clogging and leakage flow, are not determined to deduce the differential volumes. In fact, the differential volumes are modelled as such with one or two parameters.

The benefit of a low-number-of-parameter model of the differential volumes is that the amount of information needed to make a fault association is lowered considerably. In fact, often one parameter is sufficient for modelling the differential volumes, so that one operating point is enough to provide a valid estimate. This is especially important in pump systems in which the pumps are running at the same operating point all the time. It should be noted, however, that more operating point provide more information to improve the fault association. The monitoring system and method described herein provides a trust or plausibility measure for each fault in form of a decision vector. This trust or plausibility measure becomes more precise and distinct the more operating points are taken into account.

The distance of the current operating point to the non-faulty surface may be measured by four residuals r for the $i^{th}$ pump, wherein
$0 < i \leq N$, at a time $t$:

$r_1(t)$, which measures the distance to the surface $q,\omega,\Delta p$.
$r_{2,i}(t)$, which measures the distance to the surface $q,\omega,P_i$.
$r_{3,i}(t)$, which measures the distance to the surface $\omega,\Delta p,P_i$.
$r_{4,i}(t)$, which measures the distance to the surface $q,P_i,\Delta p$.

It is not optimal to look at these residuals r at only one time $t$ and to associate a fault scenario based on this "snapshot". It is preferred to measure the residuals over time to improve the volume model and to better compare different fault scenarios to foster an operators trust in the fault association. The residuals for all pumps may be collected into a residual vector as follows:

$$r(t) = [r_1(t) \quad r_{2,1}(t) \quad \cdots \quad r_{2,N}(t) \quad r_{3,1}(t) \quad \cdots \quad r_{3,N}(t) \quad r_{4,1}(t) \quad \cdots \quad r_{4,N}(t)]^T$$

In the case of the pressure curve described by the non-faulty pump characteristic $h(q,\omega,n)$, a residual $r_1(t)$ at time $t$ may be given by

$$r_1(t) = \Delta p(t) - h(Q(t), \omega(t), n(t)),$$

wherein $\Delta p(t)$ is the currently measured pressure differential.

Similarly, a residual based on the power consumption P of the pumps may be given by

$$r_{2,i}(t) = \begin{cases} P_i(t) - g(Q(t), \omega(t), n(t)) & , \quad pump\ i\ is\ activated \\ 0 & , \quad otherwise \end{cases},$$

wherein $P_i(t)$ is the currently determined power consumption of pump I and $g(q,\omega,n)$ is the non-faulty pump characteristic.

It is also possible to calculate a residual that is based on an estimated total flow Q rather than a measured total flow Q. If the estimated flow is Q, then the residual may be given by

$$r_{3,i}(t) = \alpha\left(\Delta p(t) - h(\hat{Q}_i, \omega(t), n(t))\right) + \beta\left(P_i(t) - g\left(\hat{Q}_i, \omega(t), n(t)\right)\right)$$

wherein $\alpha,\beta$ are constant weight factors and $r_{3,i}$ is the residual obtained using the determined power consumption $P_i$ and pressure differential $\Delta$p. $\hat{Q}_i$ is the flow estimated based on the power measurement $P_i$. The estimated flow $\hat{Q}_i$ is the solution to the following implicit expression at time $t$

$$0 = \frac{k_h}{\omega(t)}(\Delta p(t) - h(\hat{Q}, \omega(t), n(t)) + \frac{k_P}{\omega(t)^2}(P_i(t) - g_i(\hat{Q}, \omega(t), n(t)))$$

As well as for the total flow Q, it is possible to estimate the speed $\omega$ using the determined power consumption $P_i$ and the non-faulty pump characteristics $h$ and $g$. A residual based on the estimated speed may be given by

$$r_{4,i}(t) = (P_i(t) - g(Q(t), \hat{\omega}, n(t))),$$

wherein the estimated speed $\hat{\omega}$ is the solution to the following implicit expression at time $t$

$$0 = (\Delta p(t) - h(Q(t), \hat{\omega}, n(t)),$$

which has a unique solution for $\hat{\omega} \geq 0$.

As an example, a booster station with 2 pumps $N$ = 2 may be considered, i.e. the residual vector at time $t$ may be given by

$$r(t) = [r_1(t) \quad r_{2,1}(t) \quad r_{2,2}(t) \quad r_{3,1}(t) \quad r_{3,2}(t) \quad r_{4,1}(t) \quad r_{4,2}(t)]^T$$

The residuals are calculated based on the available measurements leading to a function $\hat{r} = fj(x(t), \theta_j)$, wherein $j$ is an index of a given fault type and $\theta_j$ is a variation parameter characterising the fault type $j$. For instance, in the following fault types or scenarios may occur:

- Clogging in a pump,
- Leakage in a pump,
- Leaking return valve at the branch of a pump,
- Mechanical/Electrical fault in one pump.

In case of clogging, the resistance term of the pump is increased with the clogging inside the pump. Hence, the resistance term in the pump model $a_h$ will increase in case of clogging. This is done by adding a value to the resistance term. The pressure and power of the clogging pumps, wherein $f$ is here the index of the clogged pump, may therefore be described by

$$\Delta p = (a_h - \theta)q_f^2 + b_h q_f \omega + c_h \omega^2$$

$$P_f = a_P q_f^2 \omega + b_P q_f \omega^2 + c_P \omega^3$$

wherein $\theta \geq 0$ is a "clogging parameter" and $q_f$ is the flow of the clogging pump. The flow and pressure of other active pumps in a pumping station ma ybe given by

$$\Delta p = a_h \left(\frac{Q - q_f}{n - 1}\right)^2 + b_h \left(\frac{Q - q_f}{n - 1}\right) \omega + c_h \omega^2$$

$$P_i = a_P \left(\frac{Q - q_f}{n - 1}\right)^2 \omega + b_P \left(\frac{Q - q_f}{n - 1}\right) \omega^2 + c_P \omega^3 \quad \forall i \neq f$$

These equations can be solved for $q_f$ and the fault parameter $\theta$ that matches the residuals the best can be found.

In case of leakage inside of a pump, an additional flow must be provided by all active pumps in the pump system. This means that in the cases when the leaking pump is active, the pressure and powers of the pumps may be given by

$$\Delta p = a_h \left(\frac{Q + \theta\sqrt{\Delta p}}{n}\right)^2 + b_h \left(\frac{Q + \theta\sqrt{\Delta p}}{n}\right) \omega + c_h \omega^2$$

$$P_i = a_P \left(\frac{Q + \theta\sqrt{\Delta p}}{n}\right)^2 \omega + b_P \left(\frac{Q + \theta\sqrt{\Delta p}}{n}\right) \omega^2 + c_P \omega^3$$

wherein, $\theta\sqrt{\Delta p}$ is the leakage flow inside the leaking pump forced though the leakage by the pressure differential $\Delta p$ provided by all active pumps. In cases when the leaking pump is inactive, the pressure and powers are given by

$$\Delta p = a_h \left(\frac{Q}{n}\right)^2 + b_h \left(\frac{Q}{n}\right) \omega + c_h \omega^2$$

$$P_i = a_P \left(\frac{Q}{n}\right)^2 \omega + b_P \left(\frac{Q}{n}\right) \omega^2 + c_P \omega^3$$

resulting in a zero residual.

In the case of leak in a non-return valve, an additional flow must be provided by all active pumps in the pumping station when the pump in the branch of the leaking non-return valve is inactive. This means that in cases when the pump of the branch of the leaking valve is inactive, the pressure and powers of the pumps are given by

$$\Delta p = a_h \left(\frac{Q + \theta\sqrt{\Delta p}}{n}\right)^2 + b_h \left(\frac{Q + \theta\sqrt{\Delta p}}{n}\right)\omega + c_h\omega^2$$

$$P_i = a_P \left(\frac{Q + \theta\sqrt{\Delta p}}{n}\right)^2 \omega + b_P \left(\frac{Q + \theta\sqrt{\Delta p}}{n}\right)\omega^2 + c_P\omega^3$$

Again, $\theta\sqrt{\Delta p}$ is the leakage flow, this time in the leaking non-return valve, forced though the leakage by the differential pressure $\Delta p$ provided by all active pumps. In the cases when the pump of the branch with the leaking valve is active, the pressure and powers are given by

$$\Delta p = a_h \left(\frac{Q}{n}\right)^2 + b_h \left(\frac{Q}{n}\right)\omega + c_h\omega^2$$

$$P_i = a_P \left(\frac{Q}{n}\right)^2 \omega + b_P \left(\frac{Q}{n}\right)\omega^2 + c_P\omega^3$$

resulting in a zero residual.

In case of a mechanical and/or electrical fault that leads to increased power consumption of the faulty pump, extra terms need to be added to the power consumption. There are different options for this. For instance, a term proportional to the square of the speed $\omega$ may be added as follows:

$$\Delta p = a_h \left(\frac{Q}{n}\right)^2 + b_h \left(\frac{Q}{n}\right)\omega + c_h\omega^2$$

$$P_i = a_P \left(\frac{Q}{n}\right)^2 \omega + b_P \left(\frac{Q}{n}\right)\omega^2 + c_P\omega^3 + \theta\omega^2$$

wherein $\theta\omega^2$ is the increased power consumption. It should be noted that other terms, such as $\theta_1$, $\theta_2\omega$, $\theta_3\omega^3$, ... or combinations of these could as well be used, dependent on what type of mechanical or electrical fault is expected. The model of the pumps not affected by the fault may be modelled by

$$\Delta p = a_h \left(\frac{Q}{n}\right)^2 + b_h \left(\frac{Q}{n}\right)\omega + c_h\omega^2$$

$$P_i = a_P \left(\frac{Q}{n}\right)^2 \omega + b_P \left(\frac{Q}{n}\right)\omega^2 + c_P\omega^3 \qquad \forall i \neq f$$

wherein $f$ is the index of the faulty pump.

As described above, each residual may be described by a function $f_j$ for the $j^{th}$ fault scenario by

$$r(t) = f_j(Q(t), \omega(t), \Delta p(t), P(t), \theta_j).$$

This means that the function $f_j$ describes the $j^{th}$ fault type, and may be parameterized by a "fault parameter" $\theta_j$. Typical fault types or scenarios are:

- Clogging inside one of the pumps, which typically occurs in submersible pumps when ocher creates clogging or in wastewater pumps when hair and other fibers creates clogging;
- Leakage inside one of the pumps, which typically occurs in submersible pumps and wastewater pumps when sand creates wear and tear on the sealing parts. This is also found in boiler feed applications when cavitation may lead to pump leakages;
- Leakage in one of the non-return valves in a multi-pump system such as booster systems or wastewater pumping stations, e.g. when a non-return valve cannot fully close due to dirt or other blockage.
- Mechanical or electrical faults leading to increase power consumption, which can happen for all types of pump systems.

In the volume modelling, an evaluation value $D_j$ is calculated for each of the fault models $f_j$ by solving the following minimization problem

$$D_j = \min_{\theta_j \in \Theta_j} \sum_{i=1}^{M} \left(r(t_i) - f_j\big(Q(t_i), \omega(t_i), \Delta p(t_i), P(t_i), \theta_j\big)\right)^T \left(r(t_i) - f_j\big(Q(t_i), \omega(t_i), \Delta p(t_i), P(t_i), \theta_j\big)\right)$$

wherein the fault parameter $\theta_j$ is used as a variation parameter (two variation parameters may be used if enough information, i.e. different operating points are available). The variation parameter $\theta_j$ characterises the $j^{th}$ fault type. The above minimization finds the variation parameter $\theta_j$ that fits the residual vector best at times $t_1, ..., t_M$, wherein $\theta_j$ is chosen among values given in a set $\Theta_j$. The set $\Theta_j$ may constrain the variation parameter $\theta_j$ to be either positive or negative depending on the "tested" fault type.

In order to normalise or scale the evaluation value, it is beneficial to calculate the sum of the squares of the residuals, which is given by

$$R = \sum_{i=1}^{M} r(t_i)^T r(t_i).$$

Using the size measure R, the evaluation value $D_j$ may be scaled as follows:

$$d_j = 1 - \frac{D_j}{R} \qquad \text{or} \qquad \hat{d}_j = \frac{D_j}{R}$$

wherein $d_j$ or $\hat{d}_j$ are normalized or scaled decision vector components ranging between 0 and 1, wherein $d_j$ is closer to 1 and $\hat{d}_j$ is closer to 0 the more likely the current operating point is to be associated with fault scenario *j*. In case of k fault scenarios, the decision vector components $d_j$ or $\hat{d}_j$ yield a decision vector of length k which allows comparison between the different fault scenarios *j* for associating a current operating state with one or more of k fault scenarios.

Figs. 6a,b show an example of a behaviour of a two-pump system as shown in Fig. 3 with k = 7 potential fault scenarios. The current operating point compared to the non-faulty model pump characteristic is displayed in terms of the components of the residual vector

$$r(t) = [r_1(t) \quad r_{2,1}(t) \quad \cdots \quad r_{2,N}(t) \quad r_{3,1}(t) \quad \cdots \quad r_{3,N}(t) \quad r_{4,1}(t) \quad \cdots \quad r_{4,N}(t)]^T,$$

wherein the number of pumps is N=2 in this case. At the beginning, there is no fault and the residuals are stable over time except for the points when the second pump (pump 2) is switched on and off. In the middle of Fig. 6a, there is a clogging in pump 1, which affects the residuals in a distinctive way. In the end of Fig. 6a, there is a clogging in pump 2, which affects the residuals in a way that differs distinctively from the clogging in pump 1. When the above-mentioned modelling of the volumes is performed, the resulting decision vector components $d_j$ are shown in the table of Fig. 6b in the first row for the actual clogging in pump 1 and in the second row for the actual clogging in pump 2. The decision vector components $d_j$ in the black cells are closest to 1 with distinction from all others in the row. This means that the decision vector components $d_j$ provide a good decision basis for an operator to associate the current operating state with a specific fault scenario. The decision vectors provide trust and plausibility in the fault association.

Figs. 7a,b show an example of another behaviour of the two-pump system with the same k = 7 potential fault scenarios. Fig. 7a illustrates how it shows in the residual vector

$$r(t) = [r_1(t) \quad r_{2,1}(t) \quad \cdots \quad r_{2,N}(t) \quad r_{3,1}(t) \quad \cdots \quad r_{3,N}(t) \quad r_{4,1}(t) \quad \cdots \quad r_{4,N}(t)]^T,$$

when pump 1 is leaking first and then pump 2 is leaking. When the above-mentioned modelling of the volumes is performed, the resulting decision vector components $d_j$ are shown in the table of Fig. 7b in the first row for the actual leaking in pump 1 and in the second row for the actual leaking in pump 2. The respective decision vector components $d_j$ in the black cells are closest to 1 in the row to indicate the correct fault association. In this case, however, there are other decision vector components $d_j$ (see hatched cells) having passed a pre-determined threshold of 0.5, for instance. So, the decision vector is slightly less distinctive compared to the example shown in Figs. 6a,b. In order to improve the distinctiveness, more operating points may be taken into account, e.g. by switching on/off certain pumps or running at different speed. This may be triggered automatically or manually by an operator. This may be referred to as "active fault isolation".

As an example for active fault isolation in a case where $d_i$ and $d_j$ are both close to 1, it is not clear whether to associate the current operational point with fault type *i* or *j*. Evaluating the functions $f_i$ and $f_j$ can give information about how the operating conditions should be changed to find the difference between these. For instance, a valve leakage fault may be identified, but cannot be associated to one of the valves, the individual pumps could be started separately at given times to identify which valve is faulty. In the case of a potential clogging or pump leakage fault in a single pump system (the operating point of the pump is near the maximum power point of the pump), the speed can be changed to force the operating point into an area where a pump leakage affects the power more significantly (see Figs. 5a,b). From 5a it is further clear, for example, that a clogging fault does not affect the power consumption.

In order to foster the trust in and plausibility of the decision vector, the following rules may be applied for using the decision vector to associate a current operational point to a fault type:

1) A decision vector must have at least one decision vector component above a certain threshold, e.g. 0.5, before it can be considered as a valid candidate for fault association;
2) The largest component of the decision vector must have a minimum distance, e.g. 0.2, to the second-largest component of the decision vector component.

Fig. 8 shows the result of the monitoring method applied for a single submersible pump (as in Fig. 2) as it may be displayed on a displaying module 23 of the pump monitoring system to an operator. The displayed user interface comprises a settings section 25, a fault detection section 27, a fault detection curves section 29, and a decision signals section 31. The fault detection curves section 29 shows three plots for illustrating the three-dimensional operating space with a line for the non-faulty pump characteristic (target line) and a dot for the current operational point. As can be seen in the top plot on the right, the current efficiency is significantly below the target line. Furthermore, the head, i.e. pressure, is below the target line as can be seen from the top plot on the left. The head and efficiency drop are also displayed in the bottom graph, where the current time in indicated by a vertical dotted line. As the head drop is at 21%, i.e. above the maximal acceptable head drop threshold at 15%, the efficiency and head drop are registered in the fault detection section 27 with a time stamp when the drop occurred.

In order to give an operator a good estimate for associating this drop with a fault scenario, a decision vector with decision vector components for possible fault scenarios is displayed in the decision signals section 31. The most significant decision vector components are highlighted to emphasise the most likely fault scenario responsible for the occurred efficiency and head drop. In this case, it is most likely a pump leakage, but the decision vector component for clogging is also quite high. In this case, it may be advisable to perform an active fault isolation by changing the pump speed to an operating point where a pump leakage affects the power consumption more than the clogging. Thereby, the decision vector components may be more distinctive in order to properly associate the current operational point with the correct fault scenario.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

List of reference numerals:

| | |
|---|---|
| 1 | pump system |
| 3 | pump unit |
| 5 | VFC |
| 7 | differential pressure sensor |
| 9 | flow sensor |
| 11 | processing module |
| 13 | cloud-based computer system |
| 15 | signal connection |
| 17 | non-return valve |
| 19 | borehole |
| 21 | output pressure sensor |
| 22 | wastewater pit |
| 23 | displaying module |
| 25 | setting section |
| 27 | fault detection section |
| 29 | fault detection curves section |
| 31 | decision signals section |

## Claims

**1.** A pump monitoring system for associating a current operating state of a pump system (1) comprising $n \geq 1$ pumps (3) with one or more of $k \geq 1$ fault scenarios, wherein the pump monitoring system comprises

- an interface module for receiving at least one set of $m \geq 2$ operational values from the pump system, wherein the m operational values define a current operational point in an m-dimensional operating space, and
- a processing module (11) for processing the operational values received by the interface module,

wherein the processing module (11) is configured to consult given or determined model parameters describing a non-faulty model pump characteristic in the m-dimensional operating space, wherein the processing module (11) is further configured to determine a k-dimensional decision vector with k decision vector components being indicative of a deviation between

- an actual differential volume in the m-dimensional operating space based on distances between the m operational values and the non-faulty model pump characteristic, and
- a modelled differential volume in the m-dimensional operating space for the respective fault scenario.

**2.** The pump monitoring system according to any of the preceding claims, wherein the pump system (1) comprises one or more submersible pumps and/or wastewater pumps and/or booster pumps.

**3.** The pump monitoring system according to any of the preceding claims, wherein each decision vector component is a scalar on a normalized scale, wherein the normalized scale is identical for all decision vector components.

**4.** The pump monitoring system according to any of the preceding claims, wherein the processing module (11) is configured to model the modelled differential volume by a model function comprising one or two variation parameters, wherein the processing module is configured to vary the one or two variation parameters for fitting the modelled differential volume to the actual differential volume.

**5.** The pump monitoring system according to any of the preceding claims, wherein the processing module (11) is configured to minimise the deviation between the modelled differential volume and the actual differential volume, for example by applying a least-squared method.

**6.** The pump monitoring system according to claim 5, wherein the k decision vector components are indicative of a residual deviation after minimizing the deviation between the modelled differential volume and the actual differential volume.

**7.** The pump monitoring system according to any of the preceding claims, wherein the processing module (11) is configured to associate the current operating state with only those of the k fault scenarios for which the respective decision vector component has passed a pre-determined threshold.

**8.** The pump monitoring system according to any of the preceding claims, wherein the processing module (11) is configured to associate the current operating state with exactly one of $k \geq 2$ fault scenarios if the respective decision vector component for said fault scenario differs from a closest one of the other decision vector components by at least a pre-determined difference.

**9.** The pump monitoring system according to any of the preceding claims, wherein the processing module (11) is configured to command the pump system (1) to run at another operational point in the m-dimensional operating space if
none of $k \geq 2$ decision vector components differs from a closest one of the other decision vector components by at least a pre-determined difference.

**10.** A method for associating a current operating state of a pump system (1) comprising $n \geq 1$ pumps (3) with one or more of $k \geq 1$ fault scenarios, wherein the method comprises:

- receiving at least one set of $m \geq 2$ operational values from the pump system, wherein the m operational values define a current operational point in an m-dimensional operating space,
- processing the operational values,
- consulting given or determined model parameters describing a non-faulty model pump characteristic in the m-dimensional operating space,
- determining a k-dimensional decision vector with k decision vector components being indicative of a deviation between

  ◦ a actual differential volume in the m-dimensional operating space based on distances between the m operational values and the non-faulty model pump characteristic, and
  ◦ a modelled differential volume in the m-dimensional operating space for the respective fault scenario,

and
- displaying at least one of the k decision vector components for the respective fault scenario.

**11.** The method according to claim 10, wherein the pump system comprises one or more submersible pumps and/or wastewater pumps and/or booster pumps.

**12.** The method according to claim 10 or 11, wherein each decision vector component is a scalar on a normalized scale, wherein the normalized scale is identical for all decision vector components.

**13.** The method according to any of the claims 10 to 12, wherein the modelled differential volume is modelled by a model function comprising one or two variation parameters, wherein the one or two variation parameters are varied for fitting the modelled differential volume to the actual differential volume.

**14.** The method according to any of the claims 10 to 13, wherein the deviation between the modelled differential volume and the actual differential volume is minimised, for example by applying a least-squared method.

15. The method according to claim 14, wherein the k decision vector components are indicative of a residual deviation after minimizing the deviation between the modelled differential volume and the actual differential volume.

16. The method according to any of the claims 10 to 15, further comprising associating the current operating state to only those of the k fault scenarios for which the respective decision vector component has passed a pre-determined threshold.

17. The method according to any of the claims 10 to 16, further comprising associating the current operating state to exactly one of $k \geq 2$ fault scenarios if the respective decision vector component for said fault scenario differs from a closest one of the other decision vector components by at least a pre-determined difference.

18. The method according to any of the claims 10 to 17, further comprising commanding the pump system to run at another operational point in the m-dimensional operating space if none of $k \geq 2$ decision vector components differs from a closest one of the other decision vector components by at least a pre-determined difference.

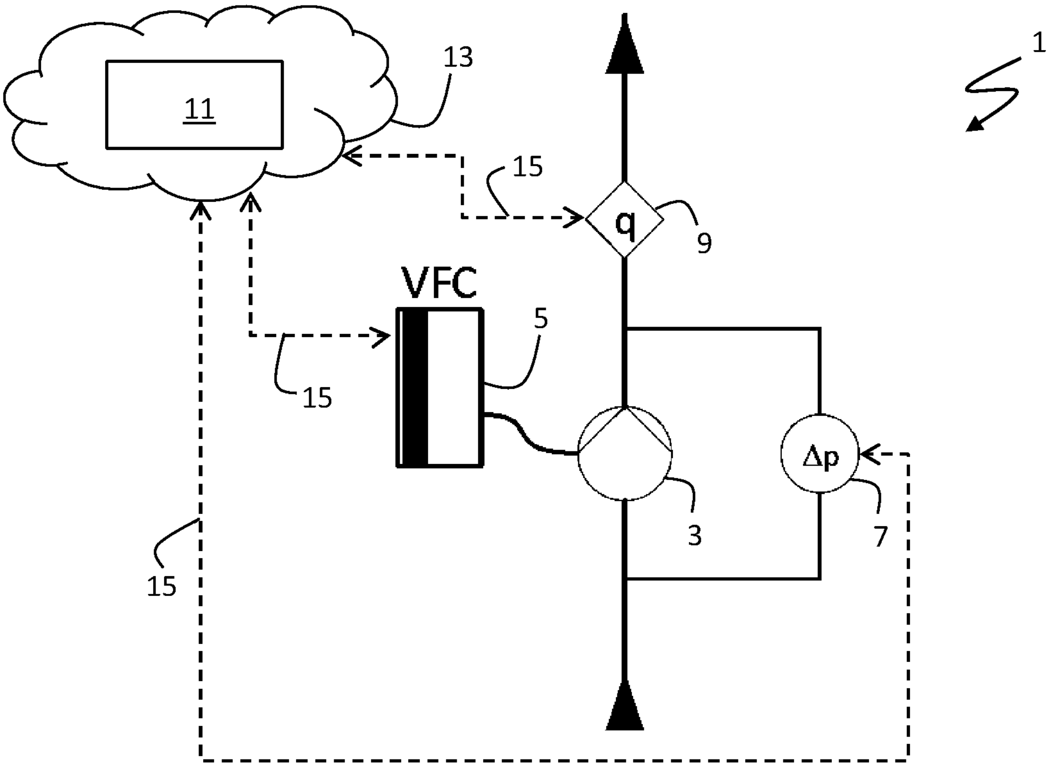
1
11
13
15
q
9
VFC
5
15
Δp
3
7
15

Fig. 1a

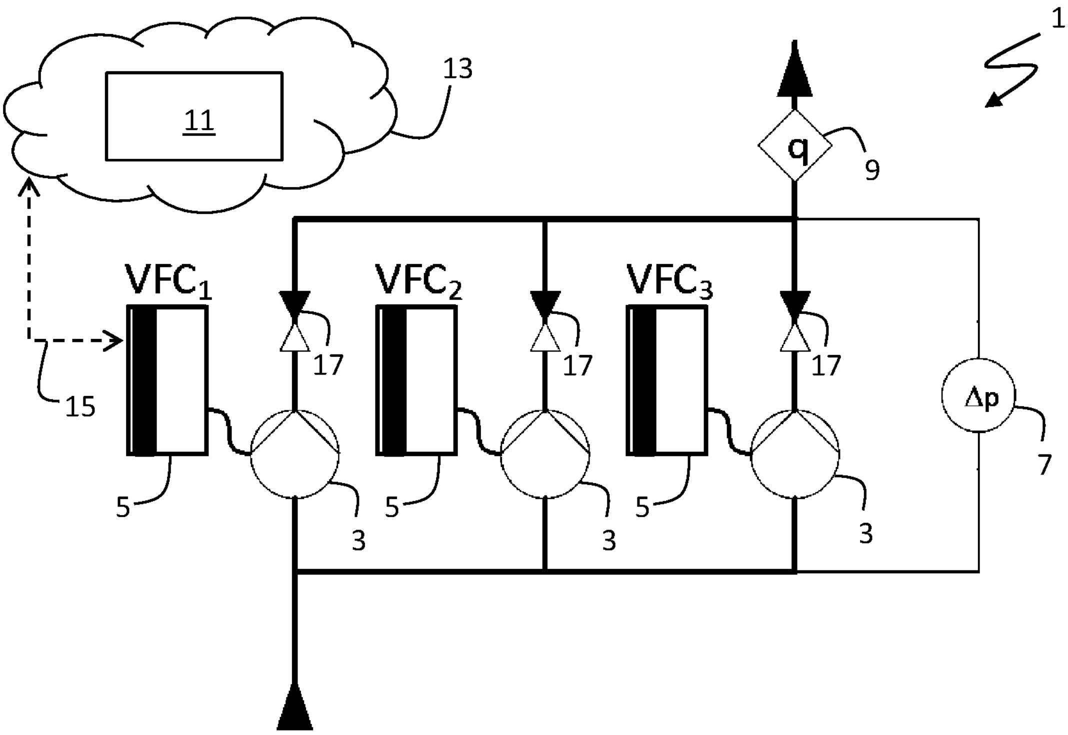
1
11
13
q
9
$VFC_1$
$VFC_2$
$VFC_3$
17
17
17
15
Δp
7
5
3
5
3
5
3

Fig. 1b

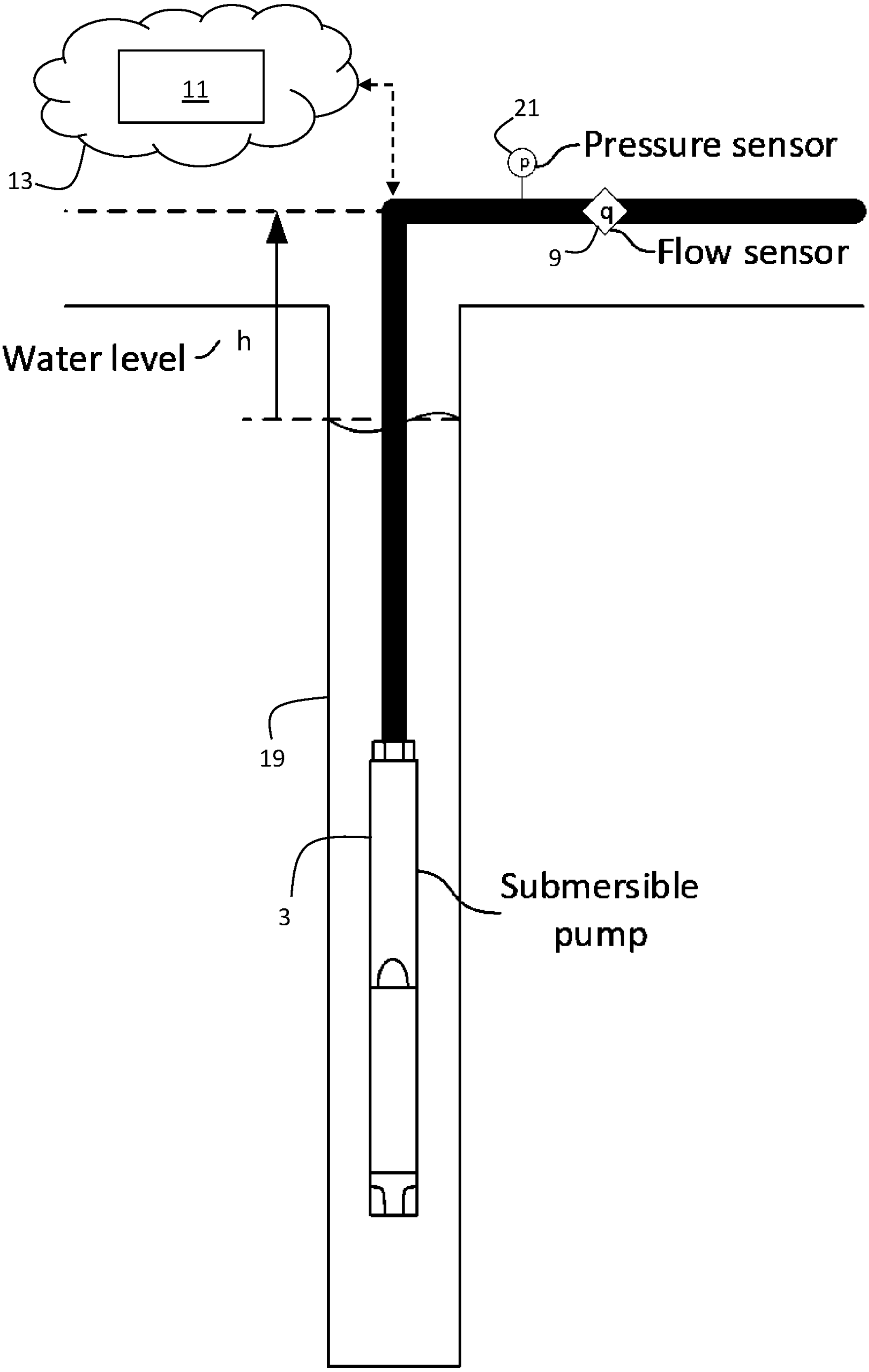
11
13
21
Pressure sensor
Flow sensor
9
Water level
h
19
3
Submersible pump

Fig. 2

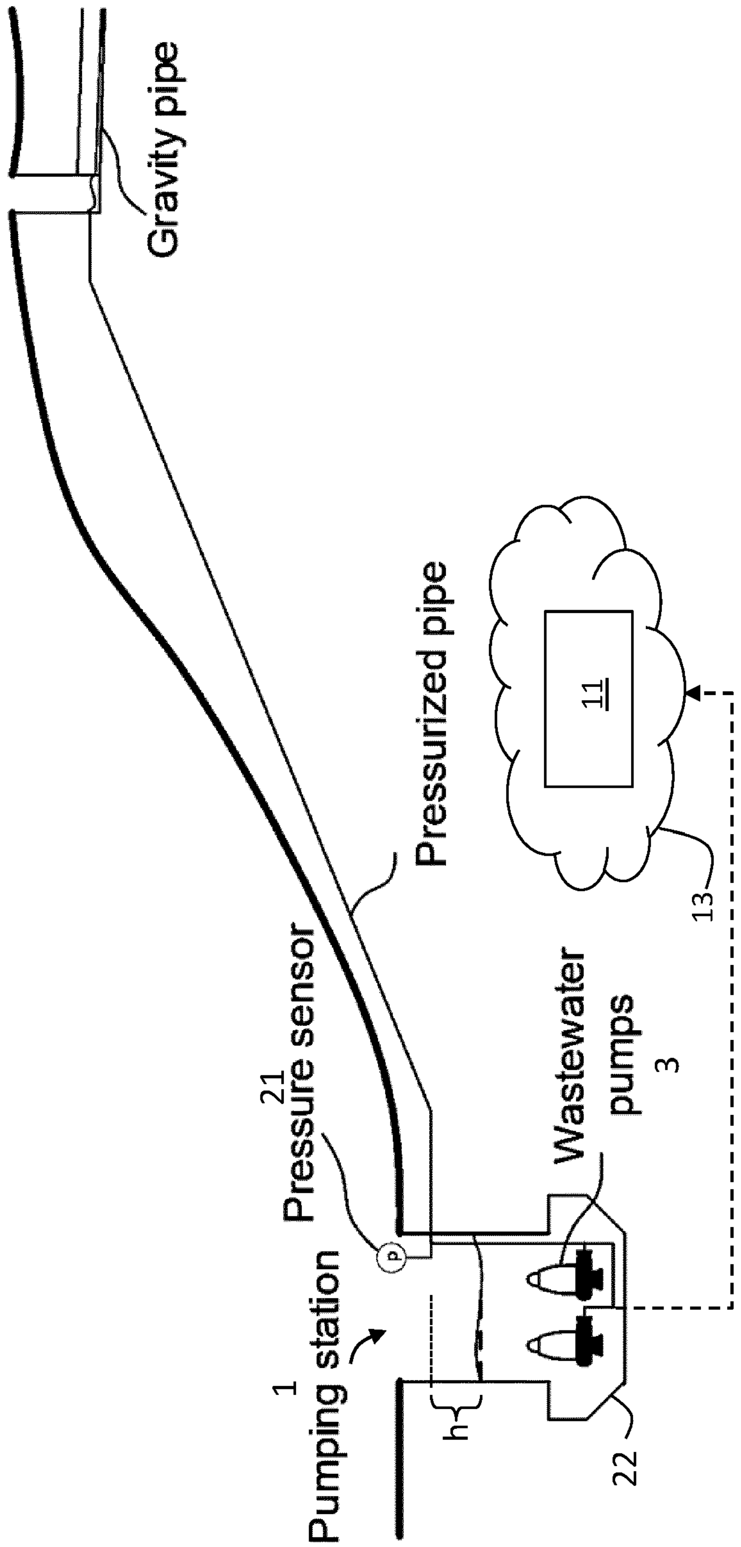
Gravity pipe
Pressurized pipe
11
13
21
Pressure sensor
Wastewater
pumps
3
1
Pumping station
h
22

Fig. 3

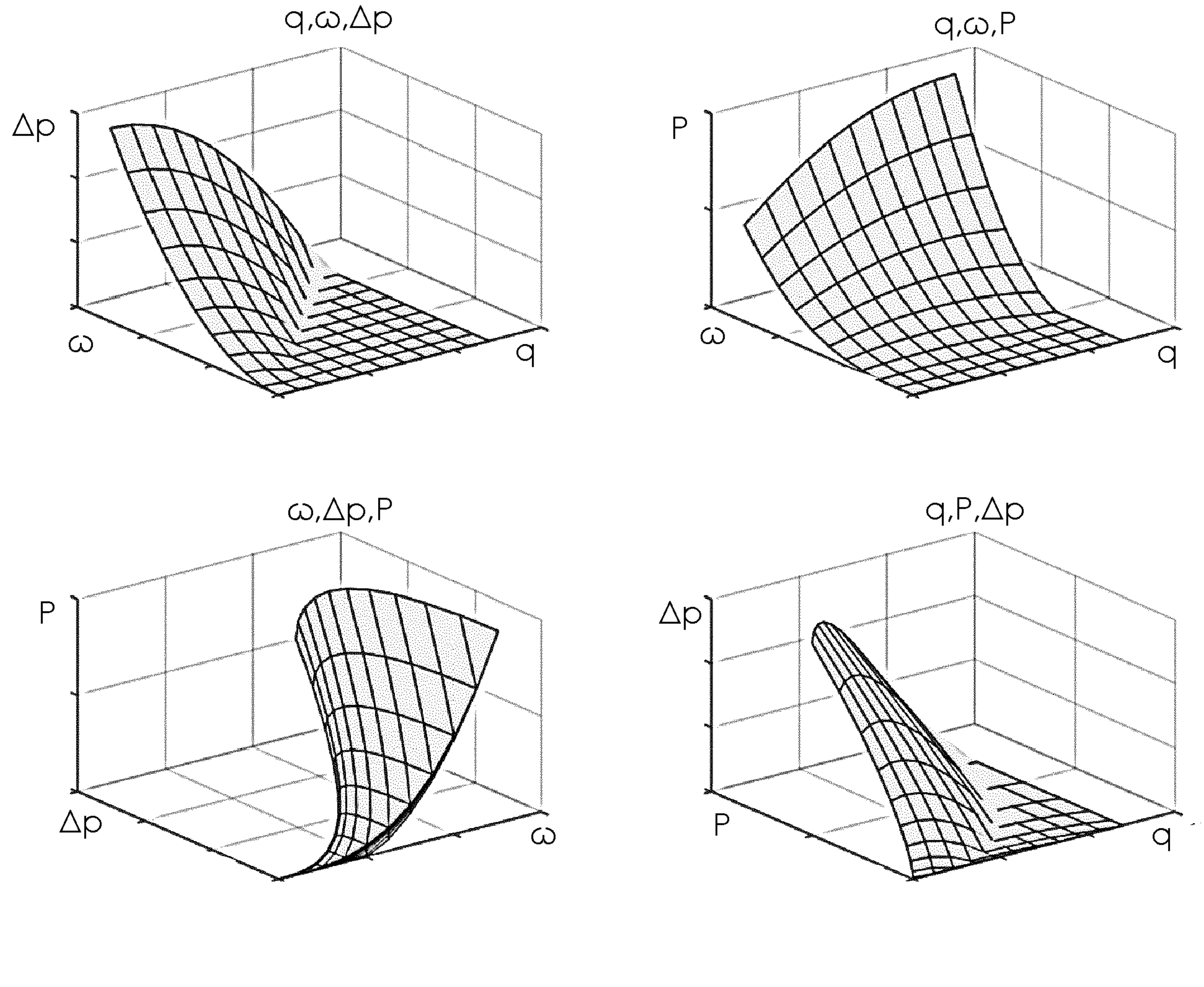


Fig. 4

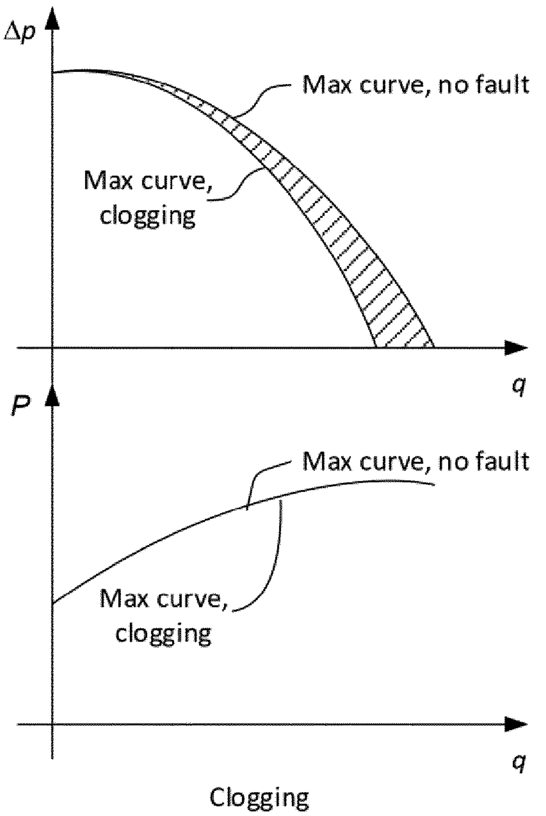
Δp
Max curve, no fault
Max curve,
clogging
q
P
Max curve, no fault
Max curve,
clogging
q
Clogging

Fig. 5a

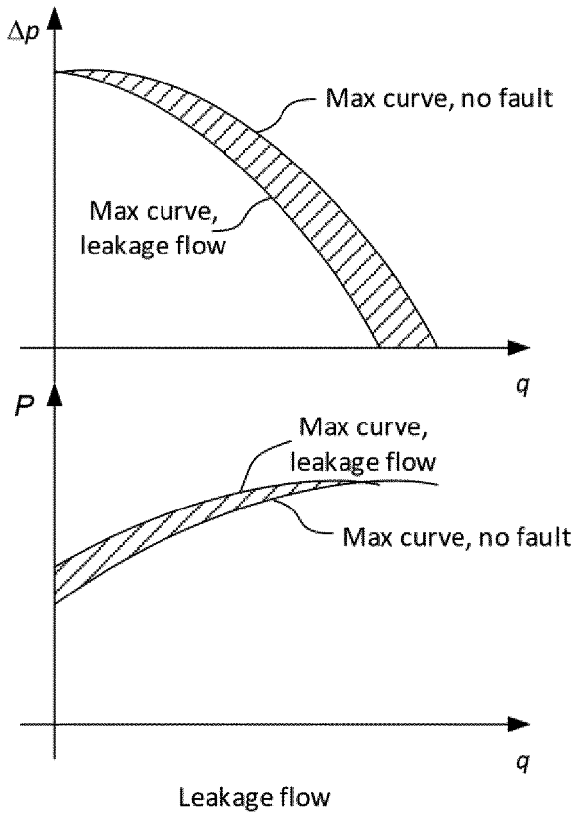
Δp
Max curve, no fault
Max curve,
leakage flow
q
P
Max curve,
leakage flow
Max curve, no fault
q
Leakage flow

Fig. 5b

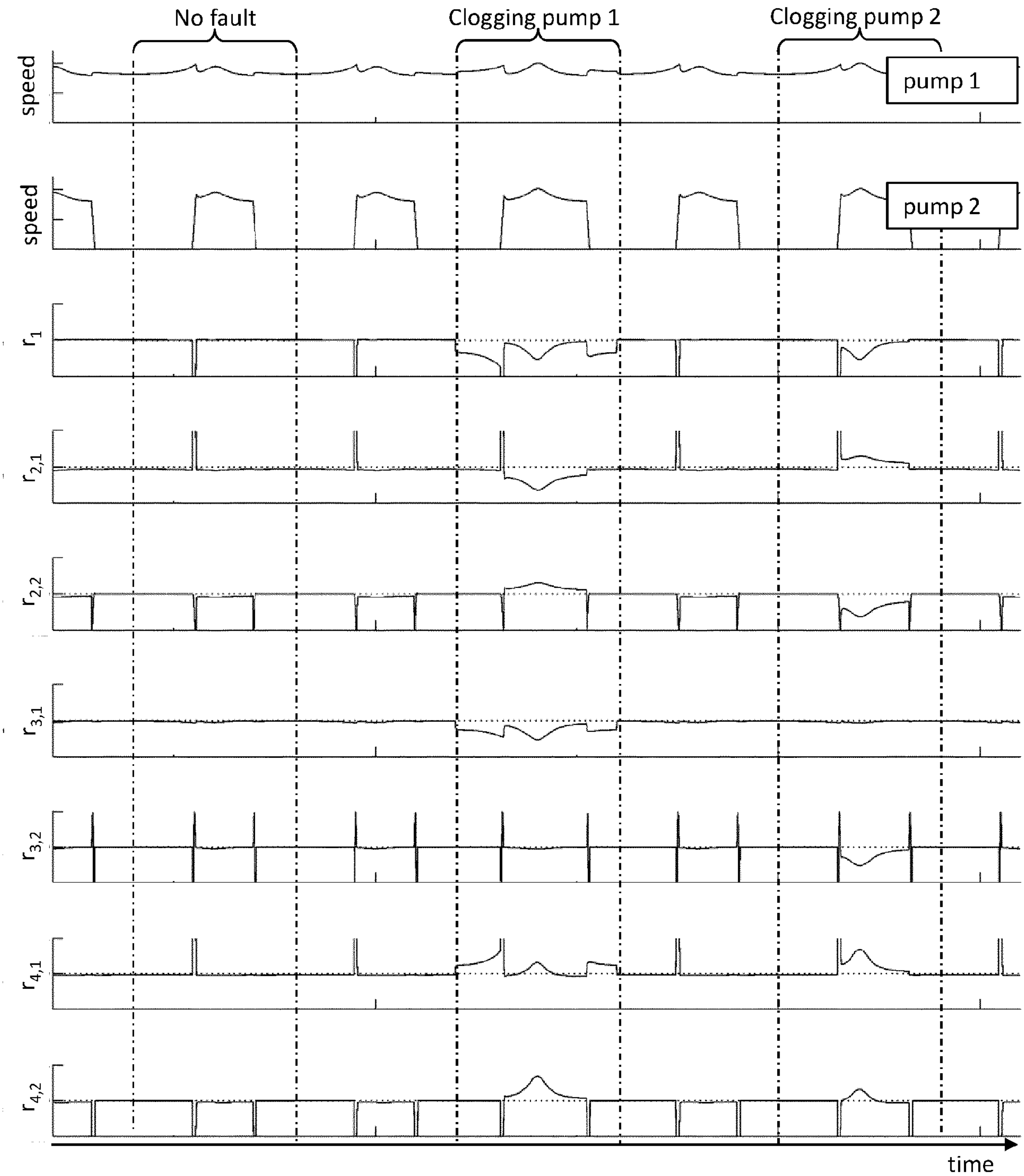


Fig. 6a

| | Clogging | | Pump leaks | | Valve leaks | | Mech/elec | | Cavi |
|---|---|---|---|---|---|---|---|---|---|
| | P1 | P2 | P1 | P2 | P1 | P2 | P1 | P2 | |
| F1 | 0.965 | 0.221 | 0.007 | 0.000 | 0.000 | 0.032 | 0.000 | 0.051 | 0.287 |
| F2 | 0.239 | 0.946 | 0.000 | 0.000 | 0.000 | 0.000 | 0.015 | 0.000 | 0.058 |

Fig. 6b

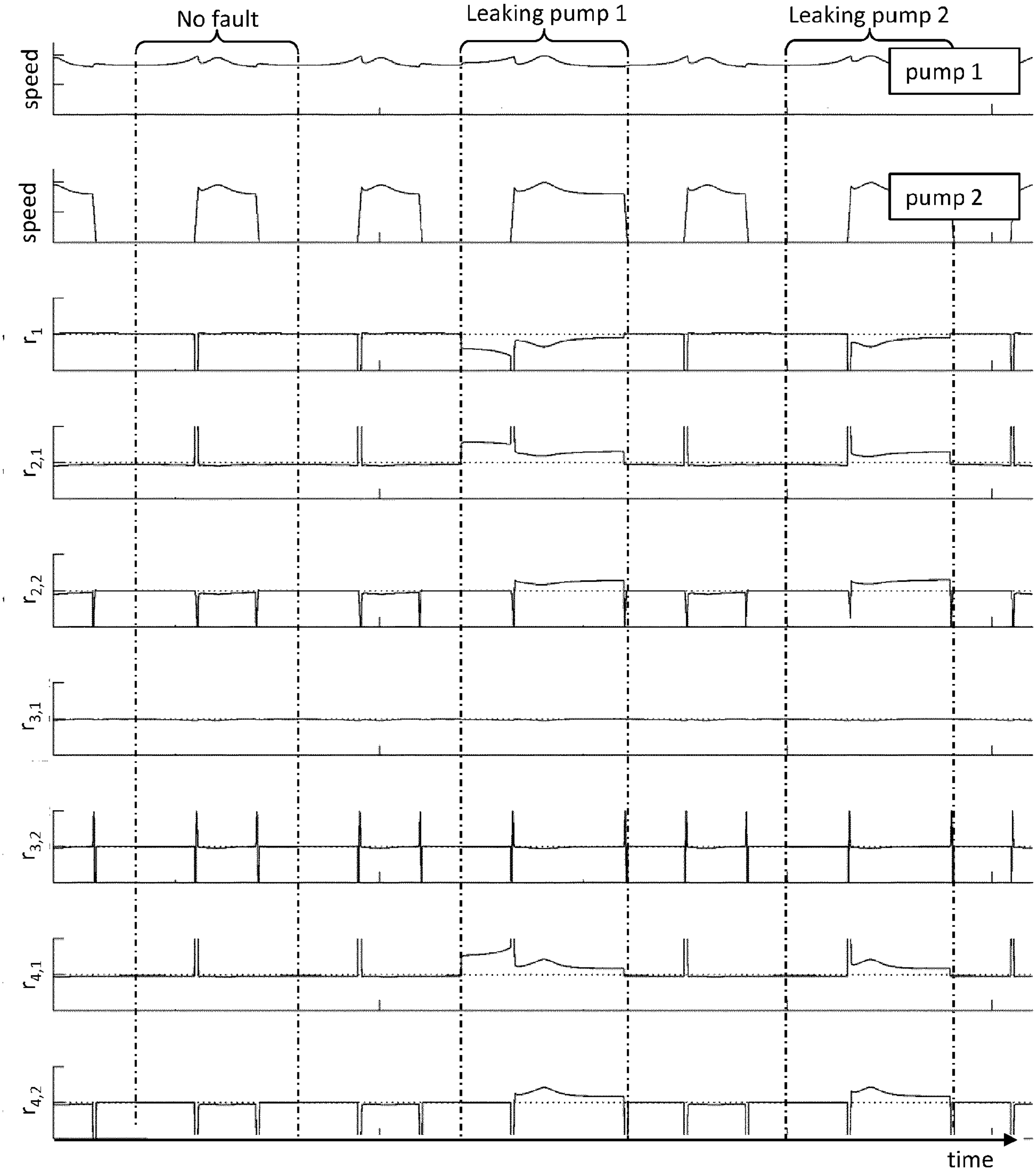


Fig. 7a

| | Clogging | | Pump leaks | | Valve leaks | | Mech/elec | | Cavi |
|---|---|---|---|---|---|---|---|---|---|
| | P1 | P2 | P1 | P2 | P1 | P2 | P1 | P2 | |
| F1 | 0.077 | 0.011 | 0.852 | 0.411 | 0.000 | 0.580 | 0.364 | 0.111 | 0.035 |
| F2 | 0.018 | 0.014 | 0.651 | 0.965 | 0.000 | 0.000 | 0.106 | 0.292 | 0.030 |

Fig. 7b

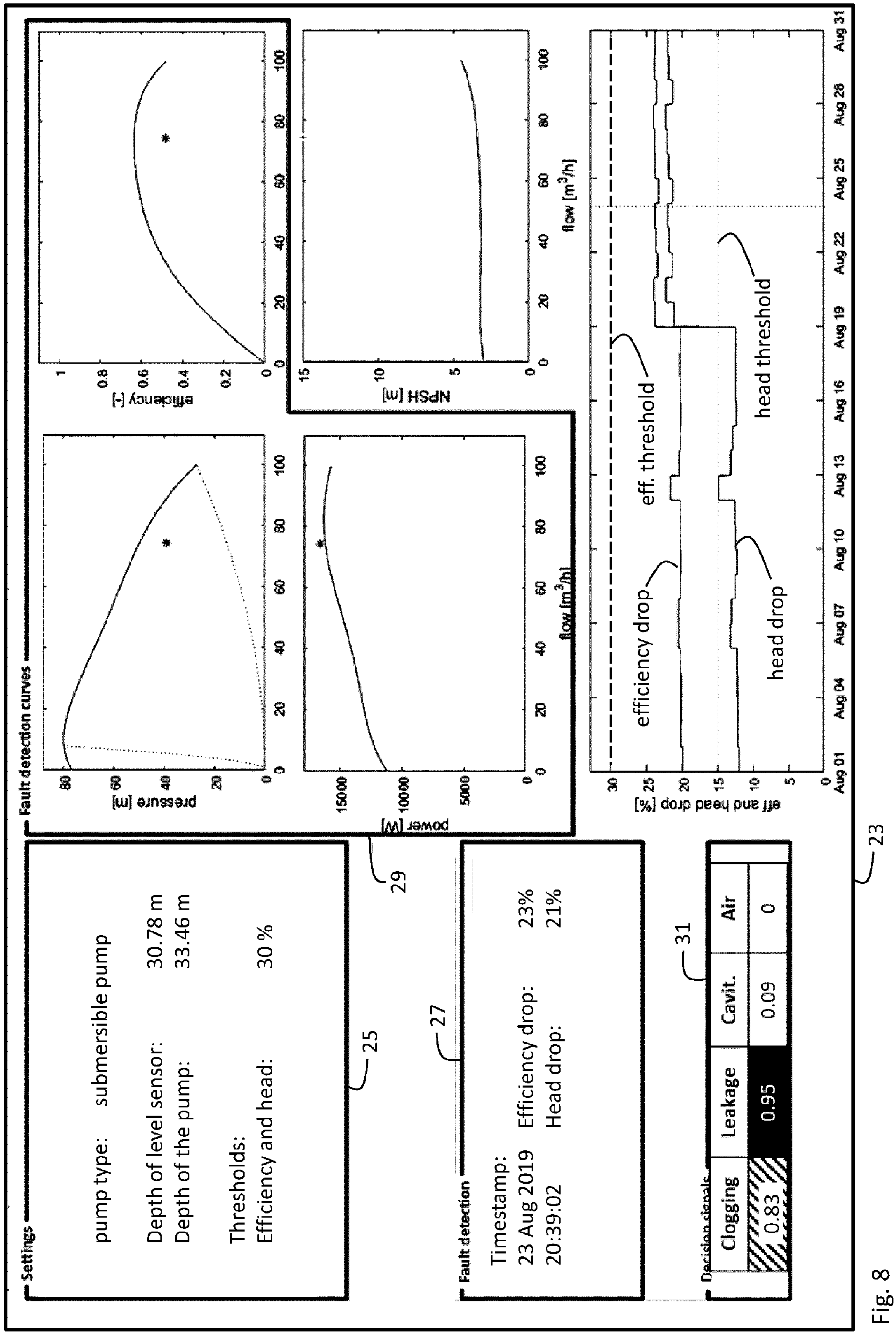
Settings
pump type: submersible pump
Depth of level sensor: 30.78 m
Depth of the pump: 33.46 m
Thresholds:
Efficiency and head: 30 %
25
Fault detection
Timestamp:
23 Aug 2019
20:39:02
Efficiency drop: 23%
Head drop: 21%
27
Decision signals
Clogging
0.83
Leakage
0.95
Cavit.
0.09
Air
0
31
Fault detection curves
pressure [m]
power [W]
efficiency [-]
NPSH [m]
flow [m^3/h]
eff and head drop [%]
efficiency drop
head drop
eff. threshold
head threshold
Aug 01
Aug 04
Aug 07
Aug 10
Aug 13
Aug 16
Aug 19
Aug 22
Aug 25
Aug 28
Aug 31
29
23

Fig. 8

Europäisches Patentamt
European Patent Office
Office européen des brevets

# EUROPEAN SEARCH REPORT

Application Number
EP 20 21 6862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DALTON TRACY ET AL: "Robust Fault Diagnosis of a Two Pump System - a Case Study", 5TH IFAC SYMPOSIUM ON MODELLING AND CONTROL IN BIOMEDICAL SYSTEMS 2003, MELBOURNE, AUSTRALIA, 21-23 AUGUST 2003, vol. 29, no. 1, 1 June 1996 (1996-06-01), pages 6400-6405, XP055809358, ISSN: 1474-6670, DOI: 10.1016/S1474-6670(17)58708-X Retrieved from the Internet: URL:https://www.sciencedirect.com/science/article/pii/S147466701758708X/pdf?md5=2feaf38bd7916a5462d4aafb1f805cec&pid=1-s2.0-S147466701758708X-main.pdf> * page 6403, lines 20-35 * ----- | 1-18 | INV. F04D15/00 F04D13/12 F04D13/14 F04D15/02 G05B23/02 |
| A | US 2018/106261 A1 (ZHANG YANCHAI [US] ET AL) 19 April 2018 (2018-04-19) * paragraphs [0064] - [0066] * ----- | 1-18 | |
| | | | TECHNICAL FIELDS SEARCHED (IPC) |
| A | DE 10 2018 200651 A1 (KSB SE & CO KGAA [DE]) 18 July 2019 (2019-07-18) * paragraphs [0012] - [0016] * ----- | 1-18 | F04D G05B |
| A | WO 2015/195520 A1 (SCHLUMBERGER CA LTD [CA]; SCHLUMBERGER SERVICES PETROL [FR] ET AL.) 23 December 2015 (2015-12-23) * paragraphs [0003], [0004], [0023], [0025], [0038], [0043], [0045]; figures 6-9 * ----- | 1-18 | |

1

The present search report has been drawn up for all claims

| Place of search | Date of completion of the search | Examiner |
|---|---|---|
| The Hague | 31 May 2021 | Brouillet, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 20 21 6862

This annex lists the patent family members relating to the patent documents cited in the above-mentioned European search report. The members are as contained in the European Patent Office EDP file on
The European Patent Office is in no way liable for these particulars which are merely given for the purpose of information.

31-05-2021

| Patent document cited in search report | Publication date | Patent family member(s) | Publication date |
|---|---|---|---|
| US 2018106261 A1 | 19-04-2018 | NONE | |
| DE 102018200651 A1 | 18-07-2019 | CN 111566354 A | 21-08-2020 |
| | | DE 102018200651 A1 | 18-07-2019 |
| | | EP 3740682 A1 | 25-11-2020 |
| | | WO 2019141658 A1 | 25-07-2019 |
| WO 2015195520 A1 | 23-12-2015 | BR 112016029297 A2 | 22-08-2017 |
| | | CA 2951279 A1 | 23-12-2015 |
| | | US 2017122094 A1 | 04-05-2017 |
| | | WO 2015195520 A1 | 23-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005078287 A1
- WO 2009039934 A1